# EUROPEAN PATENT SPECIFICATION

(11) **EP 0 668 971 B1**
(45) Date of publication and mention of the grant of the patent: **17.09.1997**
(21) Application number: 93924851.4
(22) Date of filing: 27.10.1993
(51) Int. Cl.: F16D 25/12, B60K 23/02

(54) **DEVICE FOR WARNING OF WEAR IN A CLUTCH SERVO FOR A DISK CLUTCH IN A TRANSMISSION**
ABNUTZUNGSWARNVORRICHTUNG EINER HILFSKRAFTBETÄTIGTEN KUPPLUNG
DISPOSITIF D'ALERTE D'USURE D'ASSERVISSEMENT DE L'EMBRAYAGE POUR EMBRAYAGE A DISQUE

(30) Priority: 06.11.1992 SE 9203315
(43) Date of publication of application: 30.08.1995
(73) Proprietor: SCANIA CV AKTIEBOLAG, S-151 87 Södertälje (SE)
(72) Inventor: PALMERTZ, Johan, S-151 46 Södertälje (SE)
(74) Representative: Waldebäck, Hans Olov
(86) International application number: SE9300858
(87) International publication number: WO9411647

(56) References cited:
- WO-A-91/17372
- DE-C- 2 916 807
- GB-A- 2 076 101
- US-A- 4 084 671

## Description

This invention relates to a clutch servo system having a device for warning of wear in a clutch servo for a disk clutch as indicated in the preamble to claim 1 attached.

Such a device is described in the patent SE 404 412 and its corresponding patents US 4,084,671 and GB 15 24 439.

Wear indication is in this case obtained in that when clutch linings are worn an air piston arranged in the clutch servo experiences such a return movement that it causes a valve in the servo to leak a proportion of the air out from the clutch servo. This causes the servo action from the air to be reduced, which the driver feels as the clutch pedal becomes harder to press. Moreover, the escaping air causes an acoustic signal to be transmitted to the driver.

In practice, however, there are difficulties in bringing about the effect intended with this solution of prior art. One precondition for the pedal feeling considerably harder to press is that the amount of air evacuated when the linings are worn must be sufficiently large in relation to the amount of air simultaneously supplied. The air supplied to the clutch servo is suitably taken, at least in heavier vehicles, from the braking system of the vehicle in which larger quantities of compressed air are normally available. Since this supply of compressed air is large, a relatively high proportion of air is required to be evacuated. During the time which elapses between the receiving of an indication and replacement of the linings a large proportion of air will be evacuated, resulting in a corresponding, energy demanding generation of the compressed air. Because this is not normally desirable it is instead more common not to evacuate such a large quantity of air. Consequently the intended effect of the pedal becoming harder to press will only be marginal and perhaps will not even be noticed.

The acoustic signal which is to be generated by the released air flow is also of marginal importance. In modern vehicles with effectively soundproofed cabs and enclosed engines and transmissions it is not perceptible by the driver. In buses with rear mounted engines the distance between the driver and the clutch servo is so long that no acoustic signal is audible to the driver.

The objective of this invention is to provide an arrangement for indicating the wear of the clutch disks which does not suffer from the problems of the solution of prior art discussed above. The objective of the invention is therefore to provide an indication that the disks have worn to such an extent that they require replacing as soon as possible. The indication should be given primarily in that the driver finds it much harder to press the clutch pedal than normally.

Further objectives of the invention is that it should be simple and cheap to produce. It must also be energy effective, which means, among other things, that it must not consume large quantities of compressed air from the clutch servo. Moreover, the invention must not affect the normal operation of the clutch servo to an appreciable degree when an indication is not given, and it must also be possible for the clutch servo to be dimensioned for optimum normal operation.

According to the invention the objectives sought are achieved in that the device is designed as indicated in the characterising part of claim 1.

By arranging a valve on the clutch servo feed line the air is able to flow completely unhindered during normal operation, with considerable throttling when there is an indication of worn linings. The indication can therefore be given both effectively and clearly. Because of the invention compressed air need not be released unused, which imposes lower loads on the compressed air generating system. A further advantage of the invention is that although the clutch pedal feels harder to press down when the linings are worn, the clutch can still be operated and the vehicle can continue to be driven normally in all other respects.

The invention enables the clutch servo, in normal operation, to be optimised and dimensioned with a large supply of compressed air during clutch operation, before the linings have worn to such an extent that they require replacing. This provides a fast, easily operated clutch.

Advantageous designs of the invention are described in the attached sub-claims. The advantages afforded by these designs are outlined in greater detail in the following description, which exemplifies an advantageous design of the invention.

The example in the description is given with reference to the attached drawings, in which
- Fig. 1: shows diagrammatically a device according to the invention for operating a clutch, and
- Fig. 2: shows a sensor incorporated in the device.

In this example the invention is shown applied to a heavier vehicle, such as a truck or bus. A clutch pedal 1 is arranged near the driver's seat in the vehicle for operating a clutch of the disk type arranged in the transmission of the vehicle between a driving engine and a gearbox. Clutch pedal 1 is mounted in bearings in a cowl panel 2, to which is also secured a main cylinder 3. The clutch of the vehicle is reproduced diagrammatically in the figure in the form of a lever 4 designed to operate the clutch in the conventional manner. Lever 4 is mechanically connected by a piston rod 5 to an air piston 12 accommodated in a housing, which piston is incorporated in a clutch servo 6 for operating the clutch. Clutch servo 6 is connected to clutch pedal 1 by means of a hydraulic pipe 7 between coupling servo 6 and main cylinder 3 actuated by pedal 1, for transferring the pedal movement to clutch servo 6.

Clutch servo 6 incorporates a housing 8 with an inlet connection 9 for compressed air, which connection is connected by a compressed air pipe 10 to a compressed air source. In this example the compressed air source consists of the braking system of the vehicle, more precisely one of the compressed air tanks 11 of the braking system. The connection is suitably made via a pressure reducing valve (not shown) to enable the compressed air to clutch servo 6 to be provided with a suitable pressure. In housing 8 piston rod 5 is rigidly connected to air piston 12, and is also connected to a hydraulic piston, not shown.

A servo valve (not shown), which controls the air fed to housing 8, according to the pedal movement and the hydraulic pressure from main cylinder 3, is also arranged in housing 8, so that air piston 12 in the housing is actuated and the intended servo effect is provided when the clutch is operated. During normal operation the servo valve is arranged to open the air supply at such an early stage that essentially the entire disengaging work is carried out by air piston 12. The hydraulic piston is intended mainly to perform a parallel safety function enabling the clutch to be operated in the event of failure of the compressed air supply, or if it is considerably reduced. The clutch is therefore operated fully or partially by the hydraulic piston mainly when the auxiliary force which the clutch servo is designed to provide fails, causing the clutch pedal to be harder to press. Because clutch servos of this type are well known in themselves, and a more detailed knowledge of them is not required for an understanding of this invention, no further description of them will be given here.

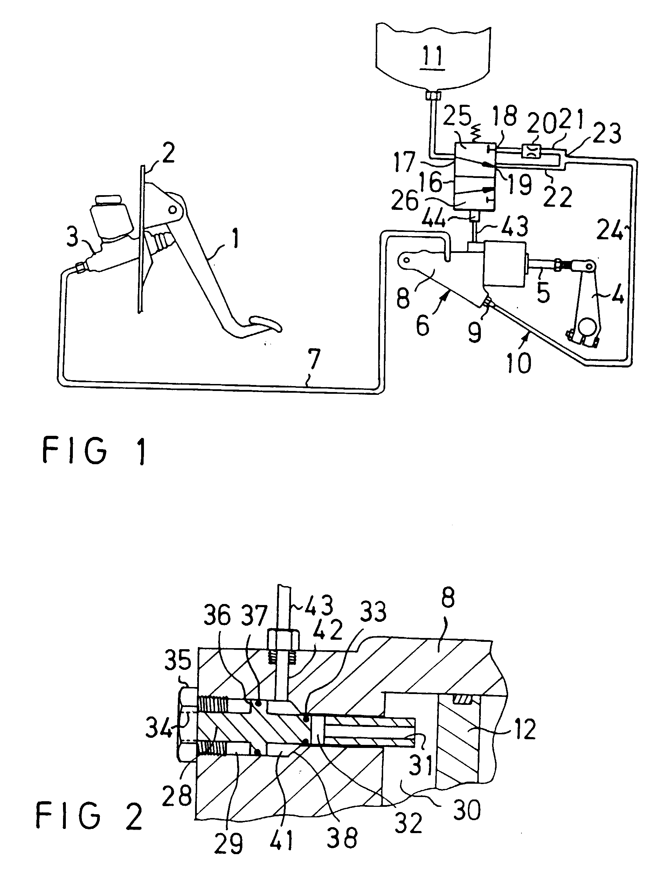

Clutch servo 6 comprises an indicating device according to the invention to indicate to and warn the driver that the clutch linings are worn and require to be replaced with new ones. The indicating device comprises a valve 16 which can be actuated by air piston 12 and which is shown in Figure 1 as a separately arranged valve, but which is in practice suitably incorporated in housing 8. Valve 16 is a so-called 3/2 valve, which means that it has three connections and two positions. Valve 16 has a first connection 17 connected to compressed air source 11, a second connection 18 connected to a compressed air pipe 21 provided with a fixed throttle 20, and a third connection 19 connected to an unthrottled, normal compressed air pipe 22. Both compressed air pipes 21, 22 are connected to each other in a branch connection 23, in which both pipes 21, 22 pass into a common compressed air pipe 24 connected to the compressed air inlet 9 of the housing.

In the position of rest 25 of valve 16, which corresponds to the position shown in Figure 1, first connection 17 is connected by valve 16 to third connection 19, enabling compressed air to be fed without obstruction to inlet 9 of the housing. In the activated position 26 of the valve first connection 17 is instead connected to second connection 18, which means that compressed air fed to inlet 9 of housing 8 must pass through pipe 21 provided with throttle 20.

The indicating device also includes a sensor which can be actuated by air piston 12 of clutch servo 6, and which in this example is designed as a valve piston 28, arranged so that it moves in parallel with air piston 12, as shown in Figure 2. A recess 29, acting as a cylinder, is arranged in housing 8 and accommodates valve piston 28, interacting with the same. Valve piston 28 extends with one end (in Figure 2 its right end) in working space 30 of air piston 12 i housing 8. At this end valve piston 28 is designed with an axial duct 31, which is terminated with a transverse hole 32. A seal 33, in the form of an O-ring, is arranged to the left of this hole 32. The other end of valve body 28, in this case the left end, is supported so that it is able to move axially in a hole 34 arranged in a sleeve 35 securely threaded in housing 8 and recess 29. Between both its ends valve body 28 is designed with an annular shoulder 36 which is sealed around its periphery against the wall of recess 29 by means of a seal 37 in the form of an O-ring.

Recess 29 in housing 8 consists of two parts, both of which are cylindrical in shape and which are interconnected by means of an annular shoulder 38. As shown in Figure 2, the left section of recess 29 has a larger diameter than its right section. The right end of valve body 28 is housed in the right section of recess 29, and annular shoulder 36 of valve body 28 is housed in its left section. Both seals 33, 37 of valve body 28 bound a sealed space 41 between valve body 28 and recess 29, which space is connected, by a duct 42 in housing 8, and also by a compressed air pipe 43, to a regulating device 44 for valve 16 arranged on feed line 10. When space 41 is pressurised valve 16 will be caused to assume its activated position 26, whilst valve 16 will assume its position of rest 25 when there is no pressurisation.

The function of the device described is as follows. During normal operation, and when the clutch linings are not worn beyond a certain limit, air piston 12 of clutch servo 6 will be used by a known method for providing the driver with auxiliary force in operating the clutch. After the clutch is operated air piston 12 returns by means of a return spring, in this case to the left, to a position of rest in which air piston 12 does not come into contact with the end of valve piston 28 projecting into working space 30 of air piston 12. In this case valve piston 28 will remain in its position of rest, corresponding to the position shown in Figure 2. Space 41 of the valve is not pressurised, and valve 16 on inlet pipe 10 of clutch servo 6 assumes its position of rest 25, enabling compressed air from compressed air source 11 to pass essentially unhindered to inlet connection 9 of the clutch servo during clutch operation.

As the clutch linings continuously wear the position of rest of air piston 12 will gradually move closer to the end of valve piston 28 projecting into working space 30. When the wear has exceeded a certain value, which is suitably dimensioned so that it corresponds to linings which have worn almost completely and to a need to replace them almost at once, air piston 12 will come into contact with valve piston 28 during its return movement and bring the same to the position of rest during its return movement. This causes valve body 28 in recess 29 to be displaced to the left, in Figure 2, and the right seal 33 of valve body 28 to pass shoulder 33 in space 29, thereby connecting sealed space 41, by means of axial duct 31 and transverse hole 32, to working space 30 of clutch servo 6. When working space 30 of the clutch servo is pressurised, this causes valve 16 on inlet pipe 10 to assume its activated position 26, forcing the feed air to pass through throttle 20. This causes the compressed air supply to inlet 9 to be delayed, which is felt by the driver in that the clutch pedal is now conciderably harder to press. This is a direct and clear indication that the clutch linings are worn and need to be replaced as soon as possible. Although the compressed air supply to clutch servo 6 is much slower than previously, it is still possible to operate the clutch and continue driving with full control.

As seal 33 of the valve piston passed shoulder 38 of recess 29 the space between seals 33, 37 was pressurised. This caused annular shoulder 36 of valve piston 28 to be exposed to the working pressure of the clutch servo on its right side, which caused valve piston 28 to be displaced to a limit position at which contact with air piston 28 ceased. This limit position corresponds to the position assumed by valve piston 28 when its shoulder 36 comes into contact with the end of sleeve 35 threaded into the left end 29 of the space. The displacement of valve piston 28 to the left causes its left end to project from hole 34 of sleeve 35, which is a further indication that the linings are worn and that the indicating device has triggered as it is designed to. Thus before the linings are replaced it is also possible visually to observe that it is the worn linings which have caused pedal 1 to become harder to press, thereby enabling other possible causes of this to be eliminated before the linings are replaced and before the clutch is dismantled. After the linings have been replaced by new ones valve body 28 is returned manually to its original, retracted position, causing everything to return to normal operation, in which the clutch servo provides the driver with the required auxiliary force to operate the clutch.

The invention may be modified and designed within the framework of the following patent claims in forms other than those indicated in the example described. For instance, other known pressure media may be used instead of compressed air. What is indicated as a pressure medium may also be considered to include negative pressure media, i.e. mainly vacuum, as far as air is concerned. Instead of arranging a fixed throttle in a valve-controlled, connectable feed line, a pipe can be used in which a variable throttle is directly connectable. This may be suitably designed as a two-position valve, one of whose positions corresponds to an unthrottled feed, and whose other position gives rise to throttling.

In the example valve piston 28 is a sensing mechanism which is used to actuate a separate valve 16. In an alternative design the sensing mechanism and the valve can be integrated with each other so that in practice they comprise the same unit. The example in the description relates to a vehicle in which the clutch is operated by means of a clutch pedal. When the invention is used in other transmissions which are not vehicle-specific, the clutch can instead be operated by operating mechanisms other than a pedal.

## Claims

1. Clutch servo system having a device for warning of wear comprising a pressure medium activated working piston (12) to provide auxiliary force, which actuates the clutch and which is arranged in a working space (30) to which is fed pressure medium, from a pressure medium source (11), via a feed line (10), when the clutch is operated under the influence of a servo valve actuated by an operating mechanism, and a sensor (28) being arranged to provide an indication, by sensing the position of the working piston (12), when clutch linings are worn, **characterised** in that a valve (16) is arranged on the feed line (10) to the working space (30) of the clutch servo (6), in that the valve (16), in a first position (25), is able to feed pressure medium to the working space (30) essentially without obstruction, in that the valve (16), in a second position (26), is arranged to engage a throttle (20) in the feed line (10), in that the valve (16) is controlled, under the influence of the sensor (28), to assume its second position (26) from the first position (25) when the sensor (28) indicates that the linings are worn, thereby engaging the throttle (20) and delaying the pressure medium supply and the effect of the auxiliary force during operation of the clutch.

2. Clutch servo system according to claim 1,
**characterised** in that the sensor is designed as a valve piston (28) with one end projecting into the working space (30) of the working cylinder (12), in that the valve piston (28) is housed in a space (29) acting as a cylinder, and in that the valve piston (28) bounds a sealed space (41) when interacting with the space (29).

3. Clutch servo system according to claim 2,
**characterised** in that the sealed space (41) communicates with a regulating mechanism (44) for activating the valve (16), and in that the valve piston (28) is arranged, when the linings are worn, to be actuated by the working piston (12), on its return movement, so that it assumes a position in which the sealed space (41) communicates with the working space (30), so that when the clutch is operated pressure medium is supplied, causing regulating mechanism (44) to activate the valve (16) so that the latter assumes its activated, second position (26).

4. Clutch servo system according to claim 1,
**characterised** in that the valve (16) is arranged on a pressure medium pipe (10) between the clutch servo (6) and the pressure medium source (11), in that the pressure medium pipe (10) comprises two parallel pipes, one pipe of which (21) comprises a fixed throttle (20) and the other pipe (22) does not appreciably affect the flow, in that the valve (16) is connected to the parallel pipes (21, 22) and is arranged to ensure that the pressure medium supply to the working space (30) only takes place through one of the pipes (21, 22).

## Patentansprüche

1. Hilfskraftbetätigte Kupplung, die mit einer Verschleißwarneinrichtung versehen ist, mit einem druckmittelbetätigten Arbeitskolben (12) zum Bereitstellen von Hilfskraft, der die Kupplung betätigt und der in einem Arbeitsraum (30) angeordnet ist, dem über eine Speiseleitung (10) Druckmittel aus einer Druckmittelquelle (11) zugeführt wird, wenn die Kupplung unter dem Einfluß eines von einer Betätigungseinrichtung betätigten Servoventils betrieben wird, und einem Sensor (28), der durch Erfassen der Stellung des Arbeitskolbens (12) zur Bereitstellung einer Anzeige angeordnet ist, wenn die Kupplungsbeläge verschlissen sind,
dadurch gekennzeichnet, daß in der Speiseleitung (10) zum Arbeitsraum (30) der hilfskraftbetätigten Kupplung (6) ein Ventil (16) angeordnet ist, daß das Ventil (16) in einer ersten Stellung (25) Druckmittel dem Arbeitsraum (30) im wesentlichen ohne Behinderung zuführen kann, daß das Ventil (16) in einer zweiten Stellung (26) dazu angeordnet ist, mit einer Drossel (20) in der Speiseleitung (10) in Eingriff zu treten, daß das Ventil (16) unter dem Einfluß des Sensors (28) so gesteuert wird, daß es aus der ersten Stellung (25) seine zweite Stellung (26) einnimmt, wenn der Sensor anzeigt, daß die Beläge verschlissen sind, wodurch es mit der Drossel (20) in Eingriff kommt und die Druckmittelzufuhr und die Wirkung der Hilfskraft während eines Betriebes der Kupplung verzögert.

2. Hilfskraftbetätigte Kupplung nach Anspruch 1,
dadurch gekennzeichnet, daß der Sensor als Ventilkolben (28) ausgeführt ist, dessen eines Ende in den Arbeitsraum (30) des Arbeitszylinders (12) ragt, daß der Ventilkolben (8) in einem als ein Zylinder wirkender Raum (29) aufgenommen ist, und daß der Ventilkolben (28) einen abgeschlossenen Raum (41) begrenzt, wenn er mit dem Raum (29) zusammenwirkt.

3. Hilfskraftbetätigte Kupplung nach Anspruch 2,
dadurch gekennzeichnet, daß der abgeschlossene Raum (41) mit einer Stelleinrichtung (44) zum Betätigen des Ventils (16) in Verbindung steht, und daß der Ventilkolben (28), wenn die Beläge verschlissen sind, so angeordnet ist, daß er durch den Arbeitskolben (12) bei dessen Rückhub betätigt wird, so daß er eine Stellung einnimmt, in der der abgeschlossene Raum (41) mit dem Arbeitsraum (30) in Verbindung steht, so daß beim Betrieb der Kupplung Druckmittel zugeführt wird, wodurch die Stelleinrichtung (44) das Ventil (16) aktiviert, so daß letzteres seine aktivierte, zweite Stellung (26) einnimmt.

4. Hilfskraftbetätigte Kupplung nach Anspruch 1,
dadurch gekennzeichnet, daß das Ventil (16) in einer Druckmittelleitung (10) zwischen der hilfskraftbetätigten Kupplung (6) und der Druckmittelquelle (11) angeordnet ist, daß die Druckmittelleitung (10) zwei parallele Leitungen aufweist, von denen eine Leitung (21) eine feste Drossel (20) aufweist und die andere Leitung (22) die Strömung nicht merklich behindert, daß das Ventil (16) mit den parallelen Leitungen (21, 22) verbunden ist und so angeordnet ist, daß die Druckmittelzufuhr zu dem Arbeitsraum (30) nur durch eine der Leitungen (21, 22) erfolgt.

## Revendications

1. Système d'asservissement d'embrayage comportant un dispositif d'avertissement d'usure, comprenant un piston de travail (12) activé par un fluide sous pression et servant à délivrer une force auxiliaire et qui actionne l'embrayage et est disposé dans un espace de travail (30) auquel est envoyé le fluide sous pression délivré par une source de fluide sous pression (11), par l'intermédiaire d'une canalisation d'alimentation (10), lorsque l'embrayage est actionné sous l'influence d'une servo-soupape actionnée par un mécanisme d'actionnement, et un capteur (28) disposé de manière à fournir, grâce à la détection de la position du piston de travail (12), une indication du moment où les garnitures d'embrayage sont usées, caractérisé en ce qu'une soupape (16) est disposée dans la canalisation d'alimentation (10) aboutissant à l'espace de travail (30) du système d'asservissement d'embrayage (6), en ce que dans une première position (25), la soupape (16) est à même d'appliquer un fluide sous pression à l'espace de travail (30) essentiellement sans obstruction, en ce que dans une seconde position (26), la soupape (16) est agencée de manière à activer un étranglement (20) situé dans la canalisation d'alimentation (10), et en ce que la soupape (16) est commandée, sous l'influence du capteur (28), pour prendre sa seconde position (26) à partir de la première position (25) lorsque le capteur (28) indique que les garnitures sont usées, ce qui provoque l'activation de l'étranglement (20) et retarde l'alimentation en fluide sous pression et l'effet de la force auxiliaire pendant le fonctionnement de l'embrayage.

2. Système d'asservissement d'embrayage selon la revendication 1, caractérisé en ce que le capteur est agencé sous la forme d'un piston de soupape (28), dont une extrémité pénètre dans l'espace de travail (30) du vérin de travail (12), en ce que le piston de soupape (28) est logé dans un espace (29) agissant en tant que cylindre et en ce que le piston de soupape (28) délimite un espace étanche (41) lorsqu'il coopère avec l'espace (29).

3. Système d'asservissement d'embrayage selon la revendication 2, caractérisé en ce que l'espace étanche (41) communique avec un mécanisme de régulation (44) pour activer la soupape (16) et en ce que le piston de soupape (28) est disposé, lorsque les garnitures sont usées, de manière à être actionné par le piston de travail (12), lors de son déplacement de retour, de sorte qu'il prend une position dans laquelle l'espace étanche (41) communique avec l'espace de travail (30) de sorte que, lorsque l'embrayage est actionné, le fluide sous pression est délivré, ce qui a pour effet que le mécanisme de régulation (44) active la soupape (16) de sorte que cette dernière prend sa seconde position activée (26).

4. Système d'asservissement d'embrayage selon la revendication 1, caractérisé en ce que la soupape (16) est disposée dans une canalisation (10) du fluide sous pression entre le dispositif d'asservissement d'embrayage (6) et la source de fluide sous pression (11), en ce que la canalisation (10) pour le fluide sous pression comprend deux canalisations parallèles, dont l'une (21) comporte un étranglement fixe (20) et dont l'autre (22) n'affecte pas de façon notable l'écoulement, et en ce que la soupape (16) est raccordée aux canalisations parallèles (21,22) et est disposée de manière à garantir que l'alimentation en fluide sous pression dans l'espace de travail (30) s'effectue uniquement par l'intermédiaire de l'une des canalisations (21,22).
